# EUROPÄISCHE PATENTSCHRIFT

(11) **EP 2 307 245 B1**
(45) Veröffentlichungstag und Bekanntmachung des Hinweises auf die Patenterteilung: **17.09.2014**
(21) Anmeldenummer: 09780910.7
(22) Anmeldetag: 22.07.2009
(51) Int. Cl.: B60S 1/04, B60S 1/34

(54) **PLATINE MIT FORMROHR ZUR FÜHRUNG UND LAGERUNG EINER ANTRIEBSWELLE**
MOUNTING PLATE WITH A FORMING TUBE FOR GUIDING AND BEARING OF PROPELLER SHAFT
TÔLE AVEC UN TUBE DE FACONNAGE POUR GUIDER ET SUPPORTER DE L'ARBRE D'ENTRAÎNEMENT

(30) Priorität: 07.08.2008 DE 102008041092
(43) Veröffentlichungstag der Anmeldung: 13.04.2011
(73) Patentinhaber: Robert Bosch GmbH, 70442 Stuttgart (DE)
(72) Erfinder: SURKAMP, Gundolf, E-08720 Vilafranca Del Penedes (Barcel) (ES); RITT, Jean-Marc, F-67000 Strasbourg (FR)
(86) Internationale Anmeldenummer: PCT/EP2009/059405
(87) Internationale Veröffentlichungsnummer: WO 2010/015510

(56) Entgegenhaltungen:
- DE-A1- 10 142 992
- DE-A1- 19 642 666
- DE-A1- 19 833 159
- FR-A1- 2 749 243

## Beschreibung

Die Erfindung betrifft eine Platine mit einem Formrohr zur Führung und Lagerung einer Antriebswelle eines Wischarmes eines Scheibenwischers. Die Verbindung zwischen dem Lager und dem Lagergehäuse muss mitunter höhere Drehmomente aufnehmen. Ferner ist es erforderlich, bei der Herstellung das Lagergehäuse in die Platine einzusetzen oder in der Platine beim Herstellungsprozess vorzusehen.

Derartige Platinen sind aus der DE 102 08 538 A1 bekannt. Solche Platinen weisen ein Lagergehäuse auf, in das eine Lagereinheit eingebaut werden kann, welche zur Führung und Lagerung einer Antriebswelle eines Scheibenwischers dient. Das Lager wird in ein Lagergehäuse eingesetzt, welches als tiefgezogenes Blechteil ausgebildet ist

Aus der DE 101 42 992 A1 ist eine gattungsgemässe Platine bekannt, die ein als Mulde ausgebildetes rohrförmiges Element aufweist. In dieses rohrförmige Element kann ein Lager zur Führung und Lagerung einer Antriebswelle eines Scheibenwischers eingebaut werden.

Die Offenlegungsschrift DE 196 42 666 A zeigt eine Wischeranlage mit einer Rohrplatine, die zur Lagerung von Abtriebswellen mindestens ein rohrförmiges Element hat, in das eine Lagerbuchse eingebracht ist.

Die Offenlegungsschrift DE 198 33 159 A zeigt eine Rohrplatine für eine Wischeranlage als Träger eines Wischerantriebs und mindestens eines Wischerlagers, das in einem Rohrstutzen am Ende eines Platinenrohrs quer zu diesem angeordnet ist.

Die Offenlegungsschrift FR 2749243 A zeigt eine Scheibenwischervorrichtung umfassend einen Schaft aufweisend eine Hülse, in welcher eine Welle angeordnet ist. Die Hülse weist zwei abstehende Flansche auf, an dessen Enden jeweils ein Kopplungselement umfassend eine weitere Hülse gebildet ist. Durch ein Karrosserieblech eines Fahrzeugs werden dann durch zwei Löcher Schrauben gesteckt, um die Schrauben in die weiteren Hülsen zu schrauben, so dass die Scheibenwischervorrichtung an dem Karrosserieblech befestigt ist.

Die Offenlegungschrift DE 101 42 992 A1 zeigt eine Wischeranlage mit einer Platine.

Ausgehend vom Stand der Technik liegt der Erfindung die Aufgabe zugrunde, eine einfacher montierbare Verbindung von Platine und Formrohr bereitzustellen. Ferner gilt es Formrohre zum Einbau in derartige Platinen anzugeben.

Die Aufgabe wird erfindungsgemäß gelöst durch eine Platine mit einem Formrohr, welches einen hülsenförmigen Bereich, der einen zylindrischen Hohlraum zur Führung und Lagerung einer Antriebswelle eines Scheibenwischers umschließt, und einen mit dem hülsenförmigen Bereich einstückig verbundenen Befestigungsbereich zur Befestigung des Formrohres an der Platine aufweist, wobei der Befestigungsbereich unmittelbar an der Platine befestigt ist, und die PLatine (1) und das Formrohr (2) durch eine Clinchverbindung (15) verbunden sind.

Vorteilhafte Weiterentwicklungen sind in den abhängigen Ansprüchen angegeben.

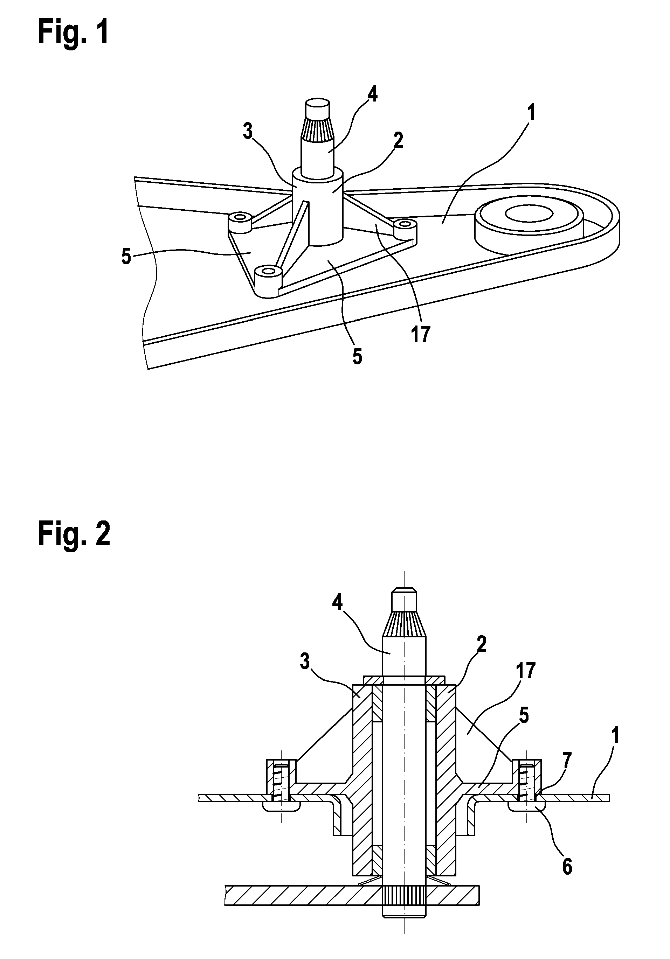

Es werden nachfolgend mehrere Varianten einer Platine mit einem Formrohr vorgestellt. Gemeinsam haben alle Ausführungsformen, dass wie beispielhaft in Figur 1 gezeigt, eine Platine 1 mit einem Formrohr 2 verbunden ist. Das Formrohr kann aus Aluminium, Zink, Kunststoff oder Blech sein. Das Formrohr 2 weist einen hülsenförmigen Bereich 3 auf, der einen zylindrischen Hohlraum zur Führung und Lagerung einer Antriebswelle 4 eines nicht dargestellten Scheibenwischers umschließt.

Mit dem hülsenförmigen Bereich 3 ist ein Befestigungsbereich 5 verbunden, wobei der hülsenförmige Bereich 3 und der Befestigungsbereich 5 einstückig sind. Der Befestigungsbereich 5 dient zur unmittelbaren Befestigung des Formrohres 2 an der Platine 1. Durch die unmittelbare Befestigung des als Lager dienenden Formrohres 2 an der Platine 1 können weitere rohrförmige Elemente, wie sie im Stand der Technik bekannt sind, entfallen.

So wird in der DE 102 08 538 A1 das Lager, also das Formrohr, in ein Lagergehäuse eingesetzt, welches als tiefgezogenes Blechteil ausgebildet ist. Es ist damit im Stand der Technik ein erhöhter Produktionsaufwand erforderlich, um zunächst das Lagergehäuse bereitzustellen. Erfindungsgemäß wird hingegen vorgeschlagen, durch die unmittelbare Befestigung den Montageaufwand zu reduzieren. Dazu trägt weiter bei, dass die Zahl der erforderlichen Komponenten reduziert ist. Daneben senkt dies den Aufwand verschiedene Komponenten zu lagern und für die Produktion bereitzuhalten.

Bei einer nicht beanspruchten Ausführung gemäß Figur 1 ist der Befestigungsbereich 5 des Formrohres 2 durch eine ebene Platte, die auf der Platine 1 aufliegt, gebildet. Diese ebene Platte liegt damit senkrecht zur Achse des Formrohres 2. Vom hülsenförmigen Bereich 3 erstrecken sich Stege 17, die zu den Löchern führen, in welche Gewindefurchschrauben 6 eingeführt sind.

Die Stege 17 nehmen Kräfte vom hülsenförmigen Bereich 3 auf und leiten diese zu den befestigenden Gewindefurchschrauben 6. Der Abstand zwischen den befestigenden Gewindefurchschrauben 6 und der Achse des Formrohres 2 ist damit etwa doppelt so groß, wie der Durchmesser des oben beschriebenen umschlossenen Hohlraums. Durch diesen Abstand ist es möglich, höhere Drehmomente auf die Platine zu übertragen, ohne an einzelnen Stellen der Platine zu hohe Kräfte einleiten zu müssen, welche zu einem Materialversagen führen könnten und/oder zusätzlichen Materialeinsatz erfordern würden.

Der Abstand zwischen den Gewindefurchschrauben 6 und der Achse des Formrohres 2 dient als Hebelarm. Da das Produkt aus Hebelarm und Kraft das Drehmoment ergibt, wird verständlich, dass durch eine Erhöhung des Abstands bei gleichem Drehmoment eine niedrigere Kraft auf die Platine 1 übertragen wird. Dies gestattet eine stabile Lagerung auch bei weniger massiven und damit leichteren und billigeren Platinen. Eine Gewichtsreduktion von Kraftfahrzeugen oder Kraftfahrzeugteilen führt dabei zur Einsparung von Treibstoff.

Die in Figur 1 gezeigte, nicht erfindungsgemässe Variante sowie die nachfolgend gezeigten Varianten haben weiterhin den Vorteil, dass die Montagebewegungen in eine Richtung geschehen. Dies liegt daran, dass das Formrohr 2 senkrecht zur Ebene der Platine 1 eingebaut wird. Die zur Montage des Formrohrs 2 auf die Platine 1 vorgesehene Montageeinrichtung greift das Formrohr 2 auf einer Seite oder auf beiden Seiten der Platine 1. Durch eine Bewegung in Richtung der Achse des Formrohrs 2 kann das Formrohr 2 in seine Einbaulage auf der Platine 1 bewegt werden. Dort kann eine Fixierung gemäß den vorliegend beschriebenen Varianten erfolgen. Demgemäß weist die Montageeinrichtung eine Schraubvorrichtung, eine Schweißvorrichtung, eine Clinch-Anlage, eine Nietvorrichtung, eine Rollvorrichtung oder eine Kombination mehrerer genannter oder weiterer Befestigungsvorrichtungen auf. Bei der Montage ist jedoch grundsätzlich keine radiale Bewegung zwischen der Platine 1 und der Montageeinrichtung erforderlich, so dass Montagebewegungen nur in einer Richtung ausreichen.

Figur 2 zeigt eine Schnittdarstellung der in Figur 1 gezeigten Variante. Dargestellt ist der Befestigungsbereich 5 des Formrohres 2, welcher durch eine ebene Platte gebildet wird, die auf der Platine 2 aufliegt. Diese ebene Platte liegt damit senkrecht zur Achse des Formrohres 2. Vom hülsenförmigen Bereich 3 erstrecken sich Stege 17, die zu den Löchern führen, in welche Gewindefurchschrauben 6 eingeführt sind

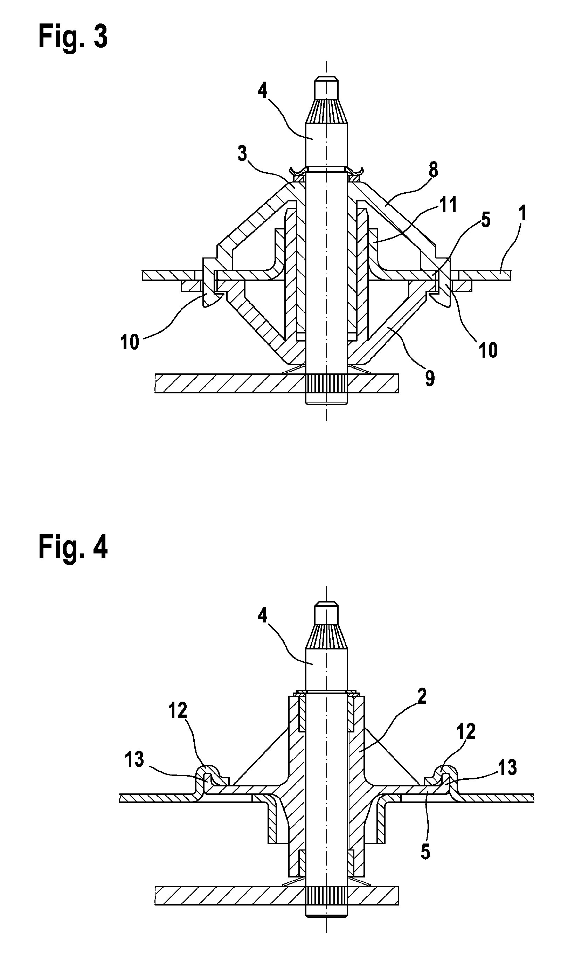

Bei der in Figur 3 gezeigten, nicht erfindungsgemässen Variante ist das Formrohr durch zwei Formrohrkomponenten gebildet, einer ersten Formrohrkomponente 8 und einer zweiten Formrohrkomponente 9. Die beiden Formrohrkomponenten können ineinander gesteckt werden. Der hülsenförmige Bereich 3 der ersten Formrohrkomponente 8 wird dabei in ein von der zweiten Formrohrkomponente 9 gebildetes Rohr eingeschoben. Vom hülsenförmigen Bereich 3 zum Befestigungsbereich 5 führen bei beiden Formrohrkomponenten 8, 9 Verbindungsstege. Diese Verbindungsstege verlaufen in einem Winkel von etwa 30° bis etwa 45° zur Achse des Formrohres 2. Sie beginnen beabstandet von der Platinenebene und führen zur Platine 1.

Im Befestigungsbereich 5 der Formrohrkomponenten 8 und 9 befinden sich Clipse 10, welche die Platine 1 umgreifen. Damit erfolgt die Befestigung der Formrohrkomponenten an der Platine 1 schraubenlos. Bevorzugt umfasst der Clips der Formrohrkomponente 8 nicht nur die Platine 1 sondern auch die zweite Formrohrkomponente 9. Dies verbessert den Zusammenhalt der beiden Komponenten und damit die Stabilität der Anordnung.

Durch die Verbindungsstege wird ein Abstand zwischen Formrohrachse und Befestigung sichergestellt. Dieser Abstand bewirkt, wie in Zusammenhang mit Figur 1 ausgeführt, ein höheres Drehmoment. Weiterhin ist zur Stabilisierung der Verbindung zwischen Formrohr 2 und Platine 1 an der Platine 1 ein Randbereich 11 vorgesehen, der senkrecht zur sonstigen Ausrichtung der Platine 1 und damit parallel zu einer Ebene der Formrohrachse gebogen ist. Dieser Randbereich 11 grenzt an die Außenfläche des hülsenförmigen Bereichs 3 der zweiten Formrohrkomponente 9. Dadurch wird eine Passung erreicht, welche zusätzlich die Übertragung höherer Kräfte und eine spielfreie Passung bewirkt.

Bei der in Figur 4 gezeigten, nicht erfindungsgemässen Ausführungsform weist die Platine 1 Laschen 12 auf. Diese Laschen ergeben sich dadurch, dass aus der Platinenebene ein Bereich senkrecht nach oben herausragt und umgebogen ist. Die Biegung gleicht einem nach unten offenen Torbogen, dessen dem Formrohr 2 nähere Säule in der Mitte endet und nicht bis zur Platinenebene reicht. Im Befestigungsbereich 5 des Formrohres 2 sind entsprechende Erhebungen 13 vorhanden, welche von den Laschen 12 im eingebauten Zustand umgriffen werden.

Die Laschen können dabei federnd ausgebildet werden, um einen einfachen Einbau zu ermöglichen. Im Idealfall genügt es bei der Montage, das Formrohr 2 von oben in die Platine 1 einzustecken. Damit ergibt sich automatisch, dass die Laschen 12 die Erhebungen 13 umgreifen. Wie aus Figur 3 ersichtlich, können mehrere derartige Laschen und Erhebungen angeordnet werden.

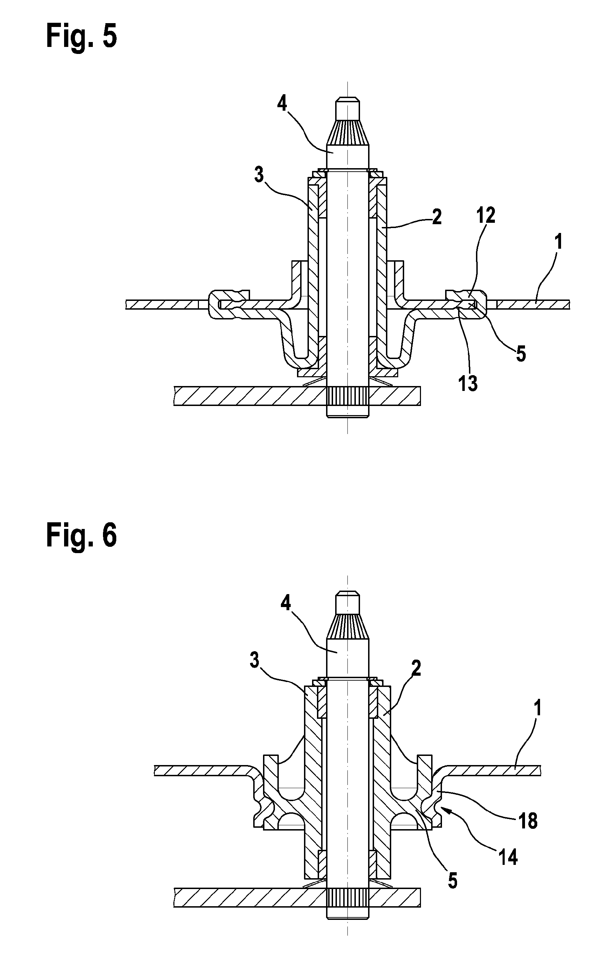

Die in Figur 5 gezeigte, nicht erfindungsgemässe Ausführung ist der vorgenannten Ausführung, die in Figur 4 ersichtlich ist, ähnlich. Der Unterschied ist jedoch, dass die Laschen 12 im Befestigungsbereich 5 des Formrohres 2 ausgebildet sind. Die Laschen 12 sind dabei so orientiert, dass sie einen ebenen Bereich der Platine 1 umfassen können. Präziser gesagt, ist der Rand des Befestigungsbereich 5 des Formrohres 2 U-förmig umgebogen. Dieser U-förmige Bereich umfasst die Platine 1. Da sich die Platine 1 vom Befestigungsbereich nicht nur in Richtung des Formrohres 2 , sondern auch noch weiter weg vom Formrohr 2 erstreckt, befindet sich in der Platine eine Öffnung im Befestigungsbereich, so dass der u-förmige Bereich an die Platine 1 geführt werden kann, um diese zumindest teilweise zu umfassen. Ebenso wie bei der in Figur 4 beschriebenen Variante können die Laschen 12 federnd ausgeführt sein. Damit ist eine einfache und zügig montierbare Verbindung von Platine 1 und Formrohr 2 möglich.

Eine weitere, nicht erfindungsgemässe Möglichkeit der Befestigung des Formrohres 2 an der Platine 1 zeigt Figur 6. In der Platinenebene und im Bereich darunter weist das Formrohr 2 eine Verdickung auf, welche den Befestigungsbereich 5 bildet. Dabei ist im Befestigungsbereich 5 des Formrohres 2 eine umlaufende Ausnehmung vorhanden. Ein senkrecht zur eigentlichen Platinenebene gebogener Bereich 18 der Platine 1 grenzt an den Befestigungsbereich 5 des Formrohres 2 an.

Ein kleiner Streifen des gebogenen Bereichs 18 der Platine 1 wird in die vorhandene Ausnehmung des Befestigungsbereichs 5 hineingerollt. Dies kann mit einem einfachen Montagewerkzeug erfolgen. Damit entsteht eine stabile Befestigung. Alternativ ist es auch möglich, die Platine 1 bereits mit diesem rollgeformten Bereich herzustellen und das Formrohr 2 bei der Montage in die Platine 1 einzuführen, so dass der rollgeformte Bereich 14 in die Ausnehmung gedrückt wird. Bevorzugt ist dazu die Platine 1 und/oder der Befestigungsbereich 5 des Formrohres 2 elastisch ausgebildet.

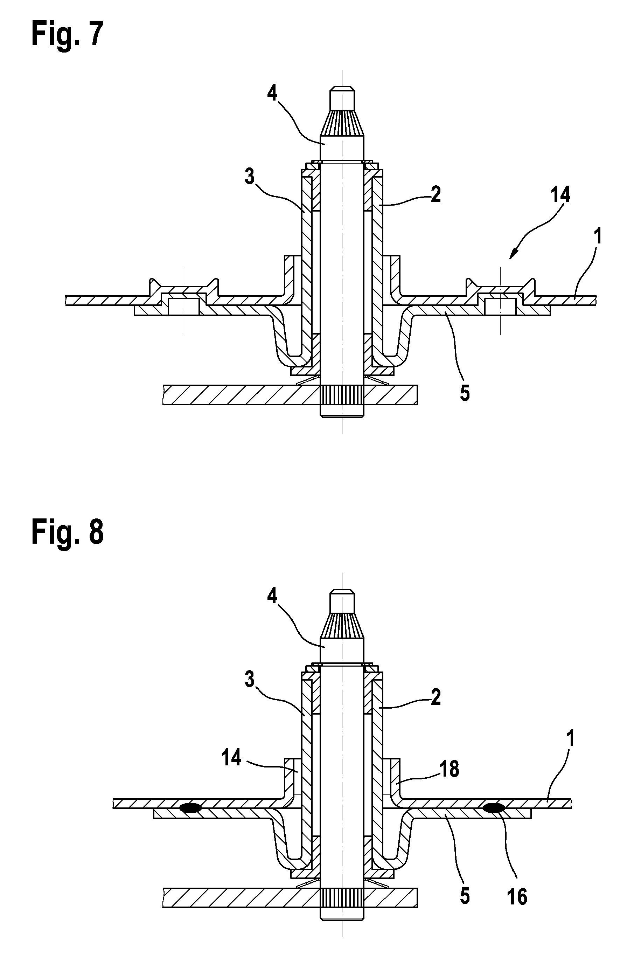

Erfindungsgemäss wird zur Befestigung des Formrohres 2 an der Platine 1 eine in Figur 7 gezeigte Clinchverbindung vorgesehen. Dabei werden der Befestigungsbereich 5 des Formrohres 2 und ein Abschnitt der Platine 1 übereinander angeordnet. In beiden Bauteilen sind lokale Hinterschneidungen geformt. Die Hinterschneidungen haben dabei die Form einer rechteckigen Erhebung, deren obere Ecken nach außen gebogen sind. Somit ist es möglich, das Formrohr 2 und die Platine 1 kraft- und/oder formschlüssig zu verbinden.

Zum Herstellen der Clinchverbindung wird entweder ein Vorloch oder ein sonstiges Hilfsfügeteil benötigt. Da der Befestigungsbereich 5 des Formrohres 2 und die Platine 1 in der Regel aus einem gut umformbaren Material gefertigt sind, ist eine Clinchverbindung als Befestigungsmittel gut geeignet.
Auch bei der in Figur 8 gezeigten, nicht erfindungsgemässen Variante sind der Befestigungsbereich 5 des Formrohres 2 und ein Abschnitt der Platine 1 übereinander angeordnet. In Teilbereichen der sich ausbildenden Kontaktfläche zwischen Platine 1 und Befestigungsbereich 5 des Formrohres 2 werden die beiden Bauteile zusammengeschweißt, so dass Schweißverbindungen 16 entstehen. Diese können große Kräfte aufnehmen, so dass sich eine stabile Befestigung des Formrohres 2 an der Platine 1 ergibt. Darüber hinaus ist auch bei der Ausführung gemäß Figur 8 ein gebogener Bereich 18 der Platine 1 vorgesehen, welcher zur Stabilisierung der Befestigung des Formrohres 2 an der Platine 1 beiträgt und/oder zur Fixierung der Bauteile beim Schweißvorgang genutzt werden kann.

Bei den in Figuren 5, 7 und 8 gezeigten Ausführungsformen ist zu erkennen, dass das Formrohr 2 die Form einer Feder aufweist. Dies kann zur Montage und Befestigung genutzt werden.

Bei den meisten der vorbeschriebenen Varianten können Formrohre ohne Hinterschneidungen eingesetzt werden. Derartige Formrohre können in einfacher Weise gegossen werden, wobei keine Schieber im Gusswerkzeug vorhanden sein müssen. Solche Schieber dienen zur Öffnung der Gussform, um Werkstücke auswerfen zu können.

Durch die umnmittelbare Befestigung des Formrohres auf der Platine können ohne Zusatzaufwand die Bautoleranzen der sich ergebenden Einheit aus Formrohr und Platine reduziert werden.

Die beschriebenen Verbindungen von Platine und Formrohr sind insbesondere vorteilhaft bei sogenannten Zwei-Modul-Wischanlagen. Bei derartigen Wischanlagen ist der Antrieb von zumindest zwei Wischarmen mechanisch entkoppelt. Für jeden Wischarm existiert ein separater Motor und eine eigene Platine 1. In diesem Fall ist es besonders wichtig, eine einfache und kostengünstige Verbindung von Platine 1 und Formrohr zu 2 erhalten.

Zusätzlich zu den gezeigten Maßnahmen ist es möglich, durch eine entsprechende Form der Öffnung der Platine 1 zum Einführen des Formrohres 2 und der Ausgestaltung des Formrohres 2 im entsprechenden Bereich Einrastungen oder ähnliche Sicherungen gegen Verdrehen des Formrohres 2 in der Platine 1 zu schaffen.

Dem Fachmann ist selbstverständlich geläufig, dass die Erfindung nicht auf die dargestellten Ausführungsbeispiele beschränkt ist. Die vorstehende Beschreibung ist daher nicht als beschränkend, sondern als erläuternd anzusehen.

## Patentansprüche

1. Platine (1) mit einem Formrohr (2), welches einen hülsenförmigen Bereich (3), der einen zylindrischen Hohlraum zur Führung und Lagerung einer Antriebswelle (4) eines Scheibenwischers umschließt, und einen mit dem hülsenförmigen Bereich (3) einstückig verbundenen Befestigungsbereich (5) zur Befestigung des Formrohres (2) an der Platine (1) aufweist, wobei der Befestigungsbereich (5) unmittelbar an der Platine (1) befestigt ist, **dadurch gekennzeichnet, dass** die Platine (1) und das Formrohr (2) durch eine Clinchverbindung (15) verbunden sind.

2. Platine nach Anspruch 1, **dadurch gekennzeichnet, dass** der Abstand zwischen einer der Befestigungen (6, 10, 11, 12, 14, 15, 16) des Formrohres (2) an der Platine (1) und der Achse des Formrohres (2) mindestens so groß wie der Durchmesser des zylindrischen Hohlraums ist, vorzugsweise eineinhalbmal so groß, besonders bevorzugt mindestens doppelt so groß.

## Claims

1. Plate (1) having a moulded pipe (2) which has a sleeve-like region (3), which surrounds a cylindrical hollow space for guiding and bearing a drive shaft (4) of a windscreen wiper, and has a fastening region (5), which is integrally connected to the sleeve-like region (3), for fastening the moulded pipe (2) to the plate (1), wherein the fastening region (5) is fastened directly to the plate (1), **characterized in that** the plate (1) and the moulded pipe (2) are connected by a clinch connection (15).

2. Plate according to Claim 1, **characterized in that** the distance between one of the fastenings (6, 10, 11, 12, 14, 15, 16) of the moulded pipe (2) to the plate (1) and the axis of the moulded pipe (2) is at least the same size as the diameter of the cylindrical hollow space, preferably one and a half times the size of the said diameter, particularly preferably at least twice the size of the said diameter.

## Revendications

1. Platine (1) comprenant un tube moulé (2), lequel comprend une région en forme de douille (3) qui entoure un espace creux cylindrique pour guider et supporter un arbre d'entraînement (4) d'un essuie-glace, et une région de fixation (5) reliée d'un seul tenant à la région en forme de douille (3) pour la fixation du tube moulé (2) à la platine (1), la région de fixation (5) étant fixée directement à la platine (1), **caractérisée en ce que** la platine (1) et le tube moulé (2) sont reliés par une liaison par clinchage (15).

2. Platine selon la revendication 1, **caractérisée en ce que** la distance entre l'une des fixations (6, 10, 11, 12, 14, 15, 16) du tube moulé (2) à la platine (1) et l'axe du tube moulé (2) est au moins aussi grande que le diamètre de l'espace creux cylindrique, de préférence une fois et demie plus grande, de manière particulièrement préférée au moins deux fois plus grande.
